# EUROPÄISCHE PATENTSCHRIFT

(11) **EP 1 134 438 B1**
(45) Veröffentlichungstag und Bekanntmachung des Hinweises auf die Patenterteilung: **15.06.2005**
(21) Anmeldenummer: 01105905.2
(22) Anmeldetag: 09.03.2001
(51) Int. Cl.: F16B 37/04, F16B 37/06

(54) **Verbindungsanordnung zum Anbringen eines Befestigungselementes an einem Bauteil**
Connection assembly to mount a fastening element on a structural member
Ensemble de raccordement pour monter un élément de fixation sur un membre structural

(30) Priorität: 16.03.2000 DE 10012781
(43) Veröffentlichungstag der Anmeldung: 19.09.2001
(73) Patentinhaber: Böllhoff GmbH, 33649 Bielefeld (DE)
(72) Erfinder: Stumpf, Michael, Dipl.-Ing., 33611 Bielefeld (DE); Borchard, August, 32657 Lemgo (DE)
(74) Vertreter: Wehnert, Werner, Dipl.-Ing.

(56) Entgegenhaltungen:
- US-A- 4 762 451

## Beschreibung

Die Erfindung betrifft eine Verbindungsanordnung zum Anbringen eines Befestigungselementes an einer Oberfläche eines Bauteiles aus einem verformbaren Material, sowie ein Befestigungselement und ein Bauteil für eine derartige Verbindungsanordnung. Die Erfindung betrifft ferner ein Verfahren zum Herstellen einer derartigen Verbindungsanordnung.

Es ist häufig erforderlich, an Bauteilen aus Werkstoffen geringer Festigkeit, insbesondere aus thermoplastischen Kunststoffen, wie z.B. an Kunststoffgehäusen Befestigungsmöglichkeiten vorzusehen, um an dem Bauteil beispielsweise ein anderes Teil anschrauben zu können. Hierzu ist es zum Beispiel bereits bekannt geworden, Gewindeeinsätze aus Metall oder einem härteren Kunststoff in eine entsprechende Bohrung des Bauteils einzupressen, beispielsweise durch Warmeinbetten, Ultraschallschweißen od. dgl. Dieses Verfahren scheidet jedoch bei dünnwandigen Bauteilen kleiner Abmessungen wie z.B. bei Gehäusen von Mobiltelefonen aus.

Eine Verbindungsanordnung nach dem Oberbegriff des Patentanspruchs 1 ist aus US-A-4,762,451 bekannt. Bei der dort offenbarten Verbindungsanordnung hat der Fügeflansch des als Käfigmutter ausgebildeten Befestigungselementes zwei diametral gegenüberliegende Langlöcher, durch die zwei umgebogene Laschen des lattenförmigen Bauteils lose greifen, so dass die Käfigmutter relativ zu dem Bauteil "schwimmend", d.h. verschiebbar gelagert ist.

Der Erfindung liegt die Aufgabe zugrunde, eine Verbindungsanordnung zum Anbringen eines Befestigungselementes aus einem Material höherer Festigkeit an einer Oberfläche eines Bauteiles aus einem Material geringerer Festigkeit zu schaffen, bei der keine Bohrung in der Oberfläche des Bauteils erforderlich ist und dennoch das Befestigungselement nach Fertigstellung des Bauteils in einfacher Weise an diesem angebracht werden kann. Durch die Erfindung soll ferner ein Befestigungselement und ein Bauteil für eine derartige Verbindungsanordnung sowie ein Verfahren zum Herstellen der Verbindungsanordnung geschaffen werden.

Die Erfindung sowie vorteilhafte Ausgestaltungen der Erfindung sind in den unabhängigen Ansprüchen 1, 13, 14 und 16 bzw. in den abhängigen Ansprüchen definiert.

Bei der erfindungsgemäß ausgebildeten Verbindungsanordnung weist das Befestigungselement einen mit einem Funktionsbereich versehenen Hauptkörper und einen daran angeformten Fügeflansch auf, und das Bauteil ist mit mindestens einem an seiner Oberfläche angeformten Fügezapfen versehen, der in eine zugehörige Aussparung des Fügeflansches greift. Der Fügezapfen ist an seinem freien Ende durch eine Materialverformung mit einem Stauchwulst versehen, der den Fügezapfen mit dem Fügeflansch formschlüssig verbindet.

Auf diese Weise wird eine flächenbündige Formschlußverbindung zwischen dem Befestigungselement und dem Bauteil geschaffen, die sich durch eine hohe Verdreh-, Auszug- und Scherfestigkeit auszeichnet. Da keine Bohrung in der Oberfläche des Bauteils erforderlich ist, kann das Bauteil extrem dünnwandig ausgebildet werden.

Das Bauteil besteht vorzugsweise aus thermoplastischem Kunststoff, kann jedoch auch aus Leichtmetall bestehen. In jedem Fall muß das Bauteil aus einem Material bestehen, das sich zur Herstellung des Stauchwulstes am Ende des Fügezapfens verformen läßt.

Besteht das Bauteil aus thermoplastischem Kunststoff, so kann der Stauchwulst durch eine herkömmliche Schmelzverformung wie z.B. durch Ultraschallschweißen, lineares oder rotierendes Reibschweißen oder einen anderen Warmschmelzvorgang herstellen. Besteht das Bauteil dagegen aus Leichtmetall, so wird der Stauchwulst zweckmäßigerweise durch eine Kaltverformung (z.B. Vernietung) hergestellt.

Anhand der Zeichnung wird ein bevorzugtes Ausführungsbeispiel der Erfindung näher erläutert. Es zeigt:
Fig. 1 eine perspektivische Ansicht eines Befestigungselementes und eines Bauteils vor dem Fügevorgang;
Fig. 2 eine der Fig. 1 entsprechende Ansicht in einer Zwischenstufe des Fügevorgangs;
Fig. 3 eine den Fign. 1 und 2 entsprechende Ansicht nach dem Fügevorgang.

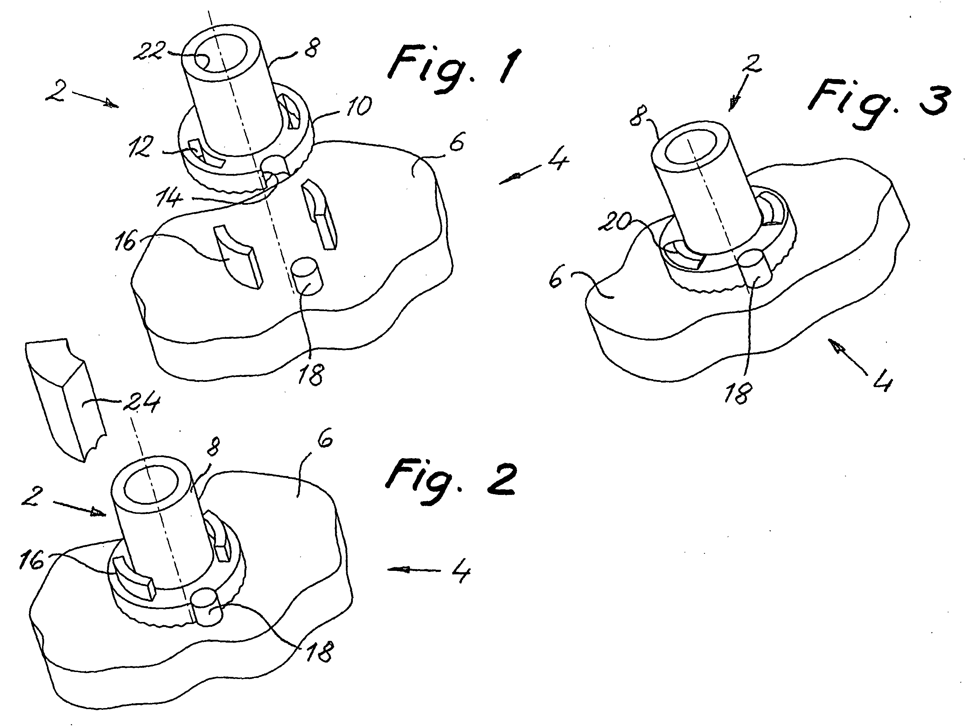

Das in Fig. 1 dargestellte Befestigungselement 2 ist an der ebenen Oberfläche 6 eines Bauteils 4 anzubringen. Bei dem Bauteil 4 handelt es sich um ein vergleichsweise dünnwandiges Teil, beispielsweise dem Gehäuse eines (im übrigen nicht dargestellten) Mobiltelefons.

Das Bauteil 4 besteht aus einem Werkstoff relativ geringer Festigkeit, insbesondere thermoplastischem Kunststoff oder aber auch Leichtmetall. Das Befestigungselement 2 besteht aus einem Werkstoff höherer Festigkeit, insbesondere Metall oder einem härteren Kunststoff. Wenn daher das Befestigungselement 2 mit dem Bauteil 4 fest verbunden ist, kann das Befestigungselement 2 für das Bauteil 4 eine Befestigungsfunktion ausüben.

Das Befestigungselement 2 besteht aus einem Hauptkörper 8 und einem daran angeformten Fügeflansch 10, der im dargestellten Ausführungsbeispiel mit drei Aussparungen 12, 14 versehen ist. Passend zu den Aussparungen 12, 14 sind an der Oberfläche 6 des Bauteiles 4 entsprechende Zapfen 16, 18 angeformt.

Der Fügeflansch 10 ist ein dünnwandiger Ringflansch, der im dargestellten Ausführungsbeispiel kreisrund ist, jedoch auch eine andere Form haben kann. Wie in den Figuren dargestellt, sind die Aussparungen 12 als ringsegmentförmige durchgehende Durchbrüche des Fügeflansches 10 ausgebildet, während die Aussparung 14 als Nut von ungefähr halbkreisförmigem Querschnitt am äußeren Umfang des Fügeflansches 10 ausgebildet ist. Die Zapfen 16, 18 an der Oberfläche 6 des Bauteils 4 sind in ihrer Querschnittsform und relativen Lage an die Aussparungen 12, 14 angepaßt, d.h. die Zapfen 16 sind ringsegmentförmig und der Zapfen 18 zylinderförmig ausgebildet.

Die Höhe der Zapfen 16 ist größer als die Höhe des Fügeflansches 10, so daß die Zapfen 16 um einen vorgegebenen Betrag über die Oberseite des Fügeflansches 10 vorstehen, wenn das Bauteil 2 auf die Zapfen 16, 18 aufgesteckt ist (s. Fig. 2). Durch eine Materialverformung der Enden der Zapfen 16 lassen sich dann Stauchwulste 20 herstellen (s. Fig. 3), die dann für eine Formschlußverbindung zwischen dem Befestigungselement 2 und dem Bauteil 4 sorgen, wie im folgenden noch genauer erläutert wird.

Der zylinderförmige Zapfen 18, der lediglich wahlweise vorgesehen wird, hat die gleiche Höhe wie der Fügeflansch 20, so daß er nicht über die Oberseite des Fügeflansches 20 vorsteht und keinen Stauchwulst hat. Er kann zur Erhöhung der Verdrehfestigkeit der Verbindungsanordnung verwendet werden.

Es versteht sich, daß die Anzahl, Form und Lage der Aussparungen 12, 14 und der Zapfen 16, 18 anders als im dargestellten Ausführungsbeispiel gewählt werden können. Die Ringsegmentform der Aussparungen 12 und Zapfen 16 sorgt für große Scherquerschnitte bei relativ geringem Platzbedarf. Je nach Anwendungsfall können jedoch auch andere geometrische Formen zweckmäßig sein. Wie dargestellt, verlaufen die Wände der Aussparungen 12 und der Zapfen 16 senkrecht zur Oberseite 6 des Bauteils 4. Es ist jedoch möglich, die Aussparungen 12 entgegen der Einsteckrichtung sich trichterförmig erweiternd auszubilden, um das Aufstecken des Bauteils 2 auf die Zapfen zu erleichtern. Eine andere Möglichkeit ist, die Durchbrüche 12 entgegen der Einsteckrichtung sich trichterförmig erweiternd auszugestalten, so daß zusätzlicher Raum geschaffen wird, in den dann Material bei der Materialverformung zum Ausbilden der Stauchwulste 20 fließt. Hierdurch wird die Auszugsfestigkeit der Verbindungsanordnung erhöht. Ohnehin sollten die Zapfen 16 etwas kleiner dimensioniert werden als die Aussparungen 12, um das Aufstecken des Bauteils 2 auf die Zapfen 16 zu erleichtern.

Der lediglich wahlweise vorgesehene Zapfen 18 kann natürlich ebenfalls eine von der dargestellten Form abweichende Form haben. So könnte er beispielsweise eckig, profiliert oder zahnartig ausgebildet sein. Auch könnte er, ähnlich wie die Zapfen 16, eine ausreichende axiale Länge zur Ausbildung eines Stauchwulstes 20 haben, so daß er dann ebenfalls zur axialen Sicherung des Befestigungselementes 2 beitragen und nicht nur im Sinne einer Nut- und Federverbindung wirken würde.

Der Hauptkörper 8 des Befestigungselementes 2, der im dargestellten Ausführungsbeispiel als Hohlzylinder ausgebildet ist, hat einen Funktionsbereich 22. Der Funktionsbereich 22 ist im dargestellten Ausführungsbeispiel als glatte Bohrung ausgebildet, kann jedoch auch aus einer Gewindebohrung, einem Teil eines Verschlusses oder einer Schnapp- oder Rastverbindung, einem glatten oder mit Gewinde versehenen Bolzen oder einem ähnlichen Befestigungsmittel bestehen.

Wie in den Figuren angedeutet, kann die Unterseite des Fügeflansches 10 geriffelt ausgebildet werden, um den Verdrehwiderstand zwischen dem Befestigungselement 2 und dem Bauteil 4 zu erhöhen.

Die Herstellung der Verbindungsanordnung zwischen dem Befestigungselement 2 und dem Bauteil 4 wird wie folgt hergestellt:

Zunächst werden das Befestigungselement 2 und das Bauteil 4 unabhängig voneinander, z.B. durch Spritzgießen oder auch in beliebiger anderer Weise, hergestellt.

Das Befestigungselement 2 wird dann auf die Oberfläche 6 des Bauteils 4 so aufgesetzt, daß die Zapfen 16, 18 von den Aussparungen 12, 14 aufgenommen werden, wie dies in Fig. 2 zu sehen ist. Die Anordnung kann hierbei so getroffen sein, daß die Zapfen 16 beispielsweise mit Spiel in den Aussparungen 12 angeordnet sind, während der Zapfen 18 in die Aussparung 14 eingepaßt ist. Hierdurch läßt sich das Befestigungselement 2 relativ zu dem Bauteil 4 präzise positionieren, falls dies in dem speziellen Anwendungsfall erforderlich ist.

Hierauf werden die überstehenden freien Enden der Zapfen 12 mittels eines (in Fig. 2 schematisch angedeuteten) Schweißwerkzeuges 24 durch eine Plastifizierung und anschließende Verformung des Materials - entsprechend einem Niet- oder Bördelvorgang - zu Stauchwulsten 20 geformt, wodurch eine Formschlußverbindung zwischen dem Befestigungselement 2 und dem Bauteil 4 entsteht. Die Größe und Form der Stauchwulste 20 wird entsprechend dem speziellen Anwendungsfall gewählt.

Besteht das Bauteil 4 aus Leichtmetall, so werden die Zapfen 16, 18 vorzugsweise als Hohlniete ausgebildet, um die Stauchwulste 20 durch einen herkömmlichen Nietvorgang (Kaltverformung) herstellen zu können.

## Patentansprüche

1. Verbindungsanordnung zum Anbringen eines Befestigungselementes (2) an einer Oberfläche (6) eines Bauteils (4) aus einem verformbaren Material, bei der
das Befestigungselement (2) einen mit einem Funktionsbereich (22) versehenen Hauptkörper (8) und einen daran angeformten Fügeflansch (10) aufweist und
das Bauteil (4) mit mindestens einem an der Oberfläche (6) angeformten Fügezapfen (16; 18) versehen ist, der in eine als Durchbruch ausgebildete zugehörige Aussparung (12; 14) des Fügeflansches (10) des Befestigungselementes (2) greift,
wobei der Fügezapfen (16) an seinem freien Ende durch eine Materialverformung mit dem Fügeflansch (10) formschlüssig verbindet,
**dadurch gekennzeichnet, dass**
der mindestens eine Fügezapfen (16) die Form eines Ringsegmentes hat,
der mindestens eine Fügezapfen (16) und die zugehörige Aussparung (12) eine aneinander angepasste Querschnittsform haben, und
der mindestens eine Fügezapfen (16) durch einen an seinem freien Ende vorgesehenen Stauchwulst (20) mit dem Fügeflansch (10) formschlüssig verbunden ist.

2. Verbindungsanordnung nach Anspruch 1, **dadurch gekennzeichnet, dass** das Befestigungselement (2) aus Metall oder Kunststoff besteht.

3. Verbindungsanordnung nach Anspruch 1 oder 2, **dadurch gekennzeichnet, dass** das Bauteil (4) aus thermoplastischem Kunststoff oder Leichtmetall besteht.

4. Verbindungsanordnung nach einem der vorhergehenden Ansprüche, **dadurch gekennzeichnet, dass** die Materialverformung zum Herstellen des Stauchwulstes (20) eine Kaltverformung oder Schmelzverformung ist.

5. Verbindungsanordnung nach Anspruch 4, **dadurch gekennzeichnet, dass** die Materialverformung zum Herstellen des Stauchwulstes (20) ein Niet- oder Bördelvorgang ist.

6. Verbindungsanordnung nach einem der vorhergehenden Ansprüche, **dadurch gekennzeichnet, dass** der Fügeflansch (10) ein dünnwandiger Ringflansch ist.

7. Verbindungsanordnung nach einem der vorhergehenden Ansprüche, **dadurch gekennzeichnet, dass** mindestens ein weiterer Fügezapfen (18) in Form eines Zylinders vorgesehen ist, der einer Aussparung (14) in Form einer am Außenumfang des Fügeflansches (10) vorgesehenen Nut zugeordnet ist.

8. Verbindungsanordnung nach Anspruch 7, **dadurch gekennzeichnet, dass** der mindestens eine weitere Fügezapfen (18) eine Länge entsprechend der Dicke des Fügeflansches (10) hat und ohne Stauchwulst ausgebildet ist.

9. Verbindungsanordnung nach einem der vorhergehenden Ansprüche, **dadurch gekennzeichnet, dass** der mindestens eine Fügezapfen (16) und die zugehörige Aussparung (12) im wesentlichen rechtwinklig zu der Oberfläche (6) des Bauteiles (4) verlaufen.

10. Verbindungsanordnung nach einem der Ansprüche 1 bis 12, **dadurch gekennzeichnet, dass** die zugehörige Aussparung (12) eine sich entgegen der Aufsteckrichtung geringfügig erweiternde Trichterform als Findehilfe hat.

11. Verbindungsanordnung nach einem der Ansprüche 1 bis 12, **dadurch gekennzeichnet, dass** die zugehörige Aussparung (12) eine sich in Aufsteckrichtung geringfügig erweiternde Trichterform zur Aufnahme von Material bei der Materialverformung hat.

12. Verbindungsanordnung nach einem der vorhergehenden Ansprüche, **dadurch gekennzeichnet, dass** der Funktionsbereich (22) des Befestigungselementes (2) eine glatte oder mit Gewinde versehene Bohrung, einen Teil eines Verschlusses oder einer Schnapp- oder Rastverbindung oder ein anderes Befestigungsmittel aufweist.

13. Befestigungselement für eine Verbindungsanordnung nach einem der Ansprüche 1 bis 12.

14. Bauteil für eine Verbindungsanordnung nach einem der Ansprüche 1 bis 12.

15. Bauteil nach Anspruch 14, **dadurch gekennzeichnet, dass** es das Gehäuse eines Mobiltelefons ist.

16. Verfahren zum Herstellen einer Verbindungsanordnung nach einem der Ansprüche 1 bis 12, bei dem
das Befestigungselement (2) mit dem Hauptkörper (8) und dem Fügeflansch (10) mit zugehöriger Aussparung (12) hergestellt wird,
das Bauteil (4) mit dem an der Oberfläche (6) angeformten mindestens einen Fügezapfen (16) in Form eines Ringsegmentes hergestellt wird,
das Befestigungselement (2) so auf das Bauteil (4) gesetzt wird, dass der mindestens eine Fügezapfen (16) in die an die Querschnittsform des Fügezapfens angepasste zugehörige Aussparung (12) des Fügeflansches (10) greift,
und danach der mindestens eine Fügezapfen (16) an seinem freien Ende durch eine Materialverformung mit dem Stauchwulst (20) versehen wird, der den Fügezapfen (16) mit dem Fügeflansch (10) formschlüssig verbindet.

17. Verfahren nach Anspruch 16, **dadurch gekennzeichnet, dass** die Materialverformung zum Herstellen des Stauchwulstes (20) eine Kaltverformung oder Schmelzverformung ist.

18. Verfahren nach Anspruch 19, **dadurch gekennzeichnet, dass** die Materialverformung zum Herstellen des Stauchwulstes (20) ein Niet- oder Bördelvorgang ist.

## Claims

1. A joining assembly for mounting a fastening element (2) to a surface (6) of a structural member of deformable material, wherein
the fastening element (2) comprises a main body (8) provided with a functional area (22) and a joining flange (10) integral therewith, and
the structural member (4) is provided with a joining projection (16; 18) integral with said surface (6), which joining projection engages into an associated recess (12; 14) of the joining flange (10) of the fastening element (2) formed as a thru-bore,
the joining projection (16) having its free end positively connected to the joining flange (10) by material deformation,
**characterized in that**
said at least one joining projection (16) is in the shape of an annular wall segment,
said at least one joining projection (16) and the associated recess (12) are of mating cross-sectional shapes, and
said at least one joining projection (16) is positively connected to the joining flange (10) by an upset bead (20) provided at its free end.

2. A joining assembly according to claim 1, **characterized in that** the fastening element (2) is made of metal or plastic material.

3. A joining assembly according to claim 1 or claim 2, **characterized in that** the structural member (4) is made of thermoplastic material or light metal.

4. A joining assembly according to any of the preceding claims, **characterized in that** said material deformation for making the upset bead (20) is a cold deformation or melt deformation.

5. A joining assembly according to claim 4, **characterized in that** material deformation for making the upset bead (20) is a riveting or crimping operation.

6. A joining assembly according to any of the preceding claims **characterized in that** said joining flange (10) is a thin-walled annular flange.

7. A joining assembly according to any of the preceding claims, **characterized in that** there is provided at least one further joining projection (18) shaped as a cylinder which is associated to a recess (14) in the shape of a groove provided at the outer periphery of the joining flange (10).

8. A joining assembly according to claim 7, **characterized in that** said at least one further joining projection (18) is of a length similar to the thickness of the joining flange (10) and is formed withoug any upset bead.

9. A joining assembly according to any of the preceding claims, **characterized in that** said at least one joining projection (16) and the associated recess (12) extend substantially perpendicularly to the surface (6) of the structural member (4).

10. A joining assembly according to any of the claims 1 to 9, **characterized in that** the associated recess (12) is of a funnel shape slightly expanding in a direction opposite to the mounting direction to facilitate insertion.

11. A joining assembly according to any of claims 1 to 9, **characterized in that** the associated recess (12) is of a funnel shape slightly expanding in the mounting direction for receiving material of said material deformation.

12. A joining assembly according to any of the preceding claims, **characterized in that** said functional area (22) of the fastening element (12) is a smooth or tapped bore or a part of a closure or a snapping or locking connection or another fastening means.

13. A fastening element for a joining assembly according to any of claims 1 to 12.

14. A structural member for a joining assembly according to any of claims 1 to 12.

15. A structural member according to claim 14, **characterized in that** it is the housing of a mobile telephone.

16. A method for making a joining assembly according to any of the claims 1 to 12, wherein
the fastening element (2) including the main body (8) and the joining flange (10) with the associated recess (12) is provided,
the structural member (4) including at least one joining projection (16) in the shape of an annular wall segment integral with said surface (6) is provided,
the fastening element (2) is positioned upon the structural member (4) such that at least one joining projection (16) engages into the associated recess (12) of the joining flange (16) which is adapted to the cross-sectional shape of the joining projection,
and thereafter said at least one joining projection (16) has its free end provided, by material deformation, with an upset bead (20) which positively connects the joining projection (16) to the joining flange (10).

17. A method according to claim 16, **characterized in that** said material deformation for making the upset bead (20) is a cold deformation or melt deformation.

18. A method according to claim 16, **characterized in that** said material deformation for making the upset bead (20) is a riveting or crimping operation.

## Revendications

1. Agencement d'assemblage pour fixer un élément de fixation (2) sur une surface (6) d'une pièce (4) faite d'une matière déformable, dans lequel
l'élément de fixation (2) présente un corps principal (8) muni d'une zone fonctionnelle (22) et d'une collerette de jonction (10) formée sur ce corps et
la pièce (4) est munie d'au moins un téton de jonction (16 ; 18) formé sur la surface (6),qui est engagé dans un évidement (12, 14) adéquat en forme d'ajour de la collerette de jonction (10) de l'élément de fixation (2),
dans lequel le téton de jonction (16) est relié au niveau de son extrémité libre à la collerette de jonction (10) par verrouillage de forme avec déformation de matière,
**caractérisé en ce que**
l'au moins un téton de jonction (16) a la forme d'un segment d'anneau,
l'au moins un téton de jonction (16) et l'évidement adéquat (12) ont des formes de section mutuellement adaptées et
l'au moins un téton de jonction (16) est relié à la collerette de jonction (10) par verrouillage de forme au moyen d'un bourrelet (20) prévu à son extrémité libre.

2. Agencement d'assemblage selon la revendication 1, **caractérisé en ce que** l'élément de fixation (2) est fait de métal ou de matière synthétique.

3. Agencement d'assemblage selon la revendication 1 ou 2, **caractérisé en ce que** la pièce (4) est faite de matière synthétique thermoplastique ou de métal léger.

4. Agencement d'assemblage selon une des revendications précédentes, **caractérisé en ce que** la déformation de matière utilisée pour la production du bourrelet (20) est une déformation à froid ou une déformation par fusion.

5. Agencement d'assemblage selon la revendication 4, **caractérisé en ce que** la déformation de matière utilisée pour la production du bourrelet (20) est une opération de rivetage ou de sertissage.

6. Agencement d'assemblage selon une des revendications précédentes, **caractérisé en ce que** la collerette de jonction (10) est une collerette annulaire à paroi mince.

7. Agencement d'assemblage selon une des revendications précédentes, **caractérisé en ce qu'**il est prévu au moins un téton de jonction supplémentaire (18) de la forme d'un cylindre qui est associé à un évidement (14) de la forme d'une encoche prévue à la périphérie extérieure de la collerette de jonction (10).

8. Agencement d'assemblage selon la revendication 7, **caractérisé en ce que** l'au moins un téton de jonction supplémentaire (18) a une longueur correspondant à l'épaisseur de la collerette de jonction (10) et est réalisé sans bourrelet.

9. Agencement d'assemblage selon une des revendications précédentes, **caractérisé en ce que** l'au moins un téton de jonction (16) et l'évidement correspondant (12) s'étendent sensiblement perpendiculairement à la surface (6) de la pièce (4).

10. Agencement d'assemblage selon une des revendications 1 à 12, **caractérisé en ce que** l'évidement correspondant (12) a une forme d'entonnoir qui s'élargit légèrement dans le sens inverse de l'emmanchement, pour servir d'aide à la localisation.

11. Agencement d'assemblage selon une des revendications 1 à 12, **caractérisé en ce que** l'évidement correspondant (12) a une forme d'entonnoir qui s'élargit légèrement dans le sens de l'emmanchement pour recevoir de la matière lors de la déformation de matière.

12. Agencement d'assemblage selon une des revendications précédentes, **caractérisé en ce que** la région fonctionnelle (22) de l'élément de fixation (2) présente un perçage lisse ou muni d'un filetage, une partie d'une fermeture ou d'un assemblage à encliquetage ou enclenchement ou un autre moyen de fixation.

13. Elément de fixation pour dispositif d'assemblage selon une des revendications 1 à 12.

14. Pièce pour dispositif d'assemblage selon une des revendications 1 à 12.

15. Pièce selon la revendication 14, **caractérisée en ce qu'**elle est le boîtier d'un téléphone mobile.

16. Procédé de fabrication d'un agencement d'assemblage selon une des revendications 1 à 12, dans lequel
on fabrique l'élément de fixation (2) avec le corps principal (8) et avec la collerette de jonction (10) munie de l'évidement correspondant (12),
on fabrique la pièce (4) avec l'au moins un téton de jonction (16) de la forme d'un secteur d'anneau formé à sa surface (6),
on dispose l'élément de fixation (2) sur la pièce (4) de telle manière que l'au moins un téton de jonction (6) soit engagé dans l'évidement adéquat (12) de la collerette de jonction (10) qui est adapté à la forme de section du téton de jonction,
et en ce qu'ensuite, par une déformation de matière, on munit l'au moins un téton de jonction (16) à son extrémité libre du bourrelet (20) qui assemble le téton de jonction (16) à la collerette de jonction (10) par une liaison par verrouillage de forme.

17. Procédé selon la revendication 16, **caractérisé en ce que** la déformation de matière pour la production du bourrelet (20) est une déformation à froid ou à une déformation par fusion.

18. Procédé selon la revendication 19, **caractérisé en ce que** la déformation de matière pour la production du bourrelet (20) est une opération de rivetage ou de sertissage.
